# EUROPÄISCHE PATENTSCHRIFT

(11) **EP 0 874 550 B1**
(45) Veröffentlichungstag und Bekanntmachung des Hinweises auf die Patenterteilung: **27.05.2009**
(21) Anmeldenummer: 96934633.7
(22) Anmeldetag: 11.10.1996
(51) Int. Cl.: A01N 65/00

(54) **EXTRAKTION VON INHALTSSTOFFEN AUS BESTANDTEILEN DES NEEM-BAUMES**
EXTRACTION OF SUBSTANCES FROM COMPONENTS OF THE NEEM TREE
EXTRACTION DE SUBSTANCES CONTENUES DANS DES CONSTITUANTS DE NEEM

(30) Priorität: 17.01.1996 DE 19601482
(43) Veröffentlichungstag der Anmeldung: 04.11.1998
(73) Patentinhaber: Terra Nostra Produkte mit Naturextrakten GmbH, 85290 Geisenfeld (DE); Rembold, Heinz, 81379 München (DE)
(72) Erfinder: REMBOLD, Heinz, D-81379 München (DE); QUIRIN, Karl-Werner, D-66701 Beckingen (DE)
(74) Vertreter: Splanemann Reitzner Baronetzky Westendorp
(86) Internationale Anmeldenummer: PCT/EP1996/004420
(87) Internationale Veröffentlichungsnummer: WO 1997/025867

(56) Entgegenhaltungen:
- EP-A- 0 311 284
- EP-A- 0 405 291
- WO-A-92/16109
- DE-A- 2 127 596
- DE-A- 2 844 781
- PROCEEDINGS OF THE 3RD INTERNATIONAL SYMPOSIUM ON SUPERCRITICAL FLUIDS, STRASBOURG, 17.-19. OKTOBER 1994, Bd. 2, Seiten 317-22, XP000670861 E. CERNIA ET AL.: "Fractionation by SFE of active substances from Azadirachta indica (A. Juss) seeds" in der Anmeldung erwähnt
- FETTE, SEIFEN, ANSTRICHMITTEL, Bd. 84, Nr. 11, 1982, HAMBURG DE, Seiten 444-51, XP002026908 EGON STAHL: "Kompromierte Gase zur Gewinnung von Naturstoffen"
- CHEMICAL ABSTRACTS, vol. 103, no. 25, 23.Dezember 1985 Columbus, Ohio, US; abstract no. 208833, FEUERHAKE, K. J.: "Effectiveness and selectivity of technical solvents for the extraction of neem seed components with insecticidal activity" XP002026910 & SCHRIFTENR. GTZ (1984), 161(NAT. PESTIC. NEEM TREE OTHER TOP. PLANTS), 103-13 CODEN: SGTZE8;ISSN: 0723-9637, 1984,
- CHEMICAL ENGINEERING, Bd. 89, Nr. 2, 1982, NEW YORK US, Seiten 50-1, XP002026909 M. SIMS: "Process uses liquid CO2 for botanical extractions"
- SEIFEN, OELE, FETTE, WACHSE, Bd. 117, Nr. 16, 1991, AUGSBURG DE, Seiten 638-41, XP000267862 K.-W. QUIRIN: "Supercritical CO2 Extraction of Natural Products used in Cosmetics and Perfumery"

## Beschreibung

Die Erfindung betrifft ein Verfahren zur Extraktion von Inhaltsstoffen aus Bestandteilen des Neem-Baumes, vorzugsweise aus Samen und Nüssen. Die Erfindung betrifft ferner einen Extrakt aus Bestandteilen des Neem-Baumes. Außerdem betrifft die Erfindung die Verwendung eines Extraktes aus Bestandteilen des Neem-Baumes sowie einen Rückstand und dessen Verwendung.

Bei der Gewinnung von Wirkstoffen aus natürlichem Material, wie Rinde, Samen oder Gräsern wird meist ein Substanzgemisch erhalten, das große Mengen an störenden Verunreinigungen aufweist. Diese Verunreinigungen können z.B. für einen unangenehmen Geruch, eine Verfärbung oder eine mangelhafte Stabilität des Produkts verantwortlich sein. Es ist deshalb wünschenswert, Wirkstoffe ohne störende Begleiter zu gewinnen. Weiterhin ist erwünscht, einen möglichst hohen Wirkstoffgehalt im Extrakt zu erzielen.

In jüngerer Zeit ist der Neem-Baum (Azadirachta indica) auf dem Gebiet der Insektenbekämpfung in das wissenschaftliche-Interesse gerückt. Dieser Baum ist in tropisch/subtropischen Gebieten rund um den Globus verbreitet. Die breiten Möglichkeiten zur Verwendung des zur Familie der Mahagonibäume gehörenden, etwa 15 Meter hoch werdenden Baumes sind in H. Schmutterer, "The Neem Tree", Verlag Chemie, Weinheim 1995, ausführlich beschrieben.

Probleme bestanden insbesondere bei der Aufbereitung von Bestandteilen des Neem-Baumes, wie Samen, Nüsse oder Rinde. Eine Extraktion wurde bisher in der Weise durchgeführt, daß die Samen oder Nüsse zunächst gepreßt wurden. Der Presskuchen und das öl wurden dann durch Extraktion mit organischen Lösungsmitteln weiter fraktioniert. Probleme ergaben sich daraus, daß die Extrakte sehr ölreich waren, die ungesättigten Fettsäuren werden vom Luftsauerstoff oxidiert, weshalb der Extrakt sehr bald einen ranzigen Geruch annimmt. Außerdem sind in den Extrakten unerwünschte Begleitstoffe, wie Schwefelverbindungen, Phenole und Bitterstoffe enthalten, die ebenfalls einen unangenehmen Geruch aufweisen. Schließlich besteht noch das Problem, daß bei den erwähnten Extraktionsverfahren meist noch Lösungsmittelreste in den Extrakten enthalten sind. Im Allgemeinen werden nämlich keine kristallinen Extrakte erhalten, die sich ohne große Probleme trocknen lassen, sondern zähe Öle, die sich auch im Hochvakuum nicht vollständig von Lösungsmittelresten befreien lassen. Dies führt zu Problemen beispielsweise bei der Verwendung von Neem-Produkten im Hausbereich. Der Verbraucher ist trotz der guten Eigenschaften der Neem-Produkte, zu denen ihre Ungiftigkeit für den Menschen und ihre hervorragende insektizide Wirkung zählen, nicht bereit, einen unangenehmen Geruch der Produkte oder eine Belastung mit Lösungsmittelresten in Kauf zu nehmen. Nachteilig ist auch die dunkle Farbe der Extrakte. Durch Verunreinigungen sind diese dunkelbraun gefärbt. Im Haushaltsbereich wünscht der Verbraucher jedoch farblose oder allenfalls leicht gefärbte Produkte. Verunreinigungen können bei Naturstoffextrakten nur durch weitere Reinigungsschritte entfernt werden, was teuer ist. Eine einfache Bleichung, z. B. durch Wasserstoffperoxid, ist nicht möglich, da dann die Wirkstoffe des Extraktes zerstört werden.

In der EP 0 581 469 A1 wird ein Verfahren zur Gewinnung eines Azadirachtin-haltigen Extraktes beschrieben, wobei zunächst gemahlener Neem-Samen oder der Presskuchen aus Neemsamen mit Wasser extrahiert werden. Anschließend werden die festen Bestandteile abzentrifugiert und die wäßrige Phase durch eine mit einem polymeren Träger gefüllte Säule geführt. Die Säule wird dann mit einem Lösungsmittel, beispielsweise Ethylacetat, gespült und die erhaltene Lösung aufkonzentriert. Das Konzentrat wird dann mit einer wäßrigen Natriumbicarbonatlösung gewaschen, mit Natriumsulfat getrocknet und zur Trockene aufkonzentriert. Erhalten wird ein Azadirachtin-reicher Extrakt.

Dieses Verfahren ist sehr aufwendig und wegen des teuren polymeren Trägers auch unwirtschaftlich.

Cernia et al. berichten über eine Extraktion von aktiven Substanzen aus Samen des Neem-Baums (Azadirachta indica (A. Juss)) mit Kohlendioxid unter superkritischen Bedingungen (Proceedeings of the 3rd International Symposium on Supercritical Fluids (chairmen: G. Brunner and M. Perrut), Strasbourg, 17.-19. October 1994, Tome 2, S. 317 (ISBN 2-905267-23-8)). Die Versuche wurden im Labormaßstab durchgeführt. Dazu wurde ein Gemisch aus 3 g gemahlene Samen und 5 g Kieselgur in einem Extraktor (32 ml) stufenweise bei unterschiedlichen Drücken mit definierten Mengen an superkritischem Kohlendioxid extrahiert. Der Extraktor wurde jeweils mit CO₂ mit einer bestimmten Dichte bzw. unter einem bestimmten Druck befüllt. Nach 10 Minuten, in denen das System aus Extraktionsgut und Kohlendioxid ins Gleichgewicht gelangen konnte, wurde das Gas rasch entspannt. Die Entspannungsstelle wurde dabei auf einer Temperatur von 200 °C gehalten. In einem ersten Extraktionsschritt wurde der Extraktor mit Kohlendioxid mit einer Dichte von 0,8 g/ml gespült. Es konnten so zunächst störende Nebenstoffe abgetrennt werden, während das Azadirachtin in der Matrix verblieb. In einem zweiten Schritt konnte , durch Variation der CO₂-Dichte auf 0,9 g/ml eine Azadirachtin-reiche Fraktion gewonnen werden. Es konnten Ausbeuten an Azadirachtin von ca. 0,1 mg / g Samen erreicht werden, was bei einem natürlichen Gehalt von ca. 3 mg Azadirachtin pro 1 g Samen unbefriedigend ist. In einem weiteren Versuch wurde im zweiten Extraktionsschritt die Matrix mit einem Schleppmittel konditioniert, indem auf das Extraktionsgut unterschiedliche Mengen an Methanol gegeben wurden. Bei Zugabe von 2 ml Methanol konnte die Azadirachtinausbeute auf ca. 1,5 mg/g Samen gesteigert werden. Dies ist jedoch immer noch lediglich die Hälfte des natürlichen Wirkstoffgehalts. Das Verfahren ist lediglich für den Labormaßstab geeignet. Bei einer Übertragung in technische Maßstäbe würde der CO₂-Verbrauch unakzeptabel hoch. Durch die hohe Temperatur der Entspannungsstelle ist außerdem eine Beschädigung der Inhaltsstoffe und damit ein Aktivitätsverlust des Extraktes zu befürchten.

Die WO 92/16109 A (D1) beschreibt ein Verfahren zur Herstellung eines lagerfähigen azadirachtinreichen Insektizids. Dabei werden zunächst gemahlene Neemsamen mit Wasser extrahiert und der extrahierte Neemsamen von der Wasserphase abgetrennt. Der Wasserextrakt wird mit einem mit Wasser nicht vollständig mischbaren organischen Lösungsmittel, das eine größere Löslichkeit für Azadirachtin hat als Wasser, extrahiert. Die organische Phase wird abgetrennt und das organische Lösungsmittel weitgehend entfernt, sodass ein Konzentrat erhalten wird. Das Konzentrat wird in einen flüssigen Kohlenwasserstoff gegeben, wobei ein Azadirachtinhaltiger Niederschlag erhalten wird.

Die EP 0 311 284 A (D2) beschreibt ein Insektizid, welches hydriertes Azadirachtin enthält. Das Insektizid wird erhalten, indem ein azadirachtinhaltiger Pflanzenextrakt hydriert wird. Der Extrakt wird erhalten, indem Neemsamen mit einem polaren Lösungsmittel extrahiert werden. Als polares Lösungsmittel kann beispielsweise Methanol oder Ethanol verwendet werden. Vor der Hydrierung werden vorzugsweise die im Neemsamen enthaltenen Fettsäuren und Öle mit einem unpolaren Lösungsmittel, wie Hexan oder Heptan, entfernt.

E. Stahl, Fette, Seifen, Anstrichmittel 84 (11), 444 - 51 (1982) (D4) beschreibt Verfahren, mit welchen sich die Löslichkeit lipophiler Verbindungen in überkritischen Gasen, insbesondere Kohlendioxid, in Abhängigkeit von Temperatur und Druck feststellen lässt. Die zu untersuchende Probe wird in einen kleinen, thermostatisierten Autoklaven eingefüllt, durch welchen dann das flüssige oder überkritische Gas geleitet wird. Das Gas belädt sich bis annähernd zur Sättigungsgrenze mit den extrahierbaren Stoffen und gelangt dann durch ein Miniabsperrventil in eine sehr feine Kapillare und entspannt sich hierbei. Der Gasstrahl mit den ausgefallenen Substanzen wird bandförmig auf eine DC-Schicht aufgetragen. Nach Durchleiten eines Normliters Gas wird die Extraktion abgebrochen. Anschließend wird die DC-Platte verschoben und die Extraktion mit einem anderen, höheren Druck fortgeführt. Nachdem die Extraktion mit steigenden Drücken wiederholt worden ist, wird die Chromatographieplatte entwickelt. Aus dem Chromatogramm erkennt man, welche Substanz bei welchem Druck extrahiert wird.

Es werden Faustregeln angegeben, mit denen erste Aussagen über die Extrahierbarkeit von Substanzen gemacht werden können. Diese lauten:
- Kohlenwasserstoffe und andere lipophile Verbindungen von geringer Polarität, z.B. Ester, Ether, Laktone und Oxide, sind leicht extrahierbar;
- Die Einführung polarer funktioneller Gruppe, wie -OH und -COOH, erschwert zunehmend die Extrahierbarkeit oder macht sie unmöglich;
- Polare Substanzen, wie Zucker und Aminosäuren, sind nicht extrahierbar;
- Fraktionierungseffekte sind möglich, wenn größere Unterschiede in der Molmasse und/oder im Dampfdruck und/oder in der Polarität der Substanzen vorliegen.

Wird das ausströmende Gas so aufgefangen, dass die extrahierbaren Substanzen abgeschieden werden, können auch quantitative Untersuchungen, beispielsweise gravimetrische Untersuchungen, durchgeführt werden. Zur präparativen Gewinnung werden Autoklaven mit einem Volumen von 0,2 bis 5 Litern verwendet.

M. Sims, Chemical Engineering 89 (2), 50 - 1 (1982), (D5) beschreibt die Extraktion von Pyrethrinen aus Pyrethrum mit überkritischem Kohlendioxid. Die Extraktionsvorrichtung umfasst einen Extraktor mit einem Volumen von 40 1. Durch diesen wird Kohlendioxid gepumpt. Die Anlage wird bei 50 bis 60 atm sowie bei Raumtemperatur (etwa 20 °C) betrieben. Nachdem das Kohlendioxid den Extraktor durchströmt hat wird es in einem Verdampfer erwärmt, sodass sich der flüssige Extrakt abscheidet und das Kohlendioxid verdampft. Das gasförmige Kohlendioxid wird anschließend wieder abgekühlt und verflüssigt und im Kreislauf wieder in den Extraktor gepumpt.

Es ist daher Aufgabe der Erfindung, ein Verfahren zur Verfügung zu stellen, das kostengünstig durchzuführen ist und dennoch ermöglicht, Extrakte aus Bestandteilen des Neem-Baumes, wie Samen oder Nüsse, herzustellen, die einen hohen Wirkstoffgehalt bei hoher Qualität aufweisen.

Diese Aufgabe wird durch ein Verfahren mit den Merkmalen des Anspruchs 1 gelöst. Vorteilhafte Ausführungsformen sind Gegenstand der abhängigen Ansprüche.

Erfindungsgemäß wird die Aufgabe dadurch gelöst, dass das Extraktionsmittel im Kreislauf geführt wird. Da das Kohlendioxid mehrfach zur Extraktion verwendet wird, reduziert sich der Verbrauch drastisch. Es sind längere Extraktionszeiten möglich, was sich in einer höheren Ausbeute an Extrakt niederschlägt. Überraschenderweise hat sich dabei gezeigt, daß auch bei mehrstündigen Extraktionszyklen Extrakte von hoher Reinheit gewinnen lassen. Störende Nebenprodukte lassen sich entweder abtrennen oder verbleiben in der Matrix. Die Extrakte zeigen lediglich eine leichte gelbliche Färbung und sind nahezu geruchlos. Sie lassen sich daher ohne weitere Reinigung beispielsweise zu Produkten für den Endverbraucher weiterverarbeiten. Als weiterer Vorteil läßt sich die Extraktion leicht automatisch überwachen, was zu einer weiteren Erniedrigung der Kosten führt.

Die Extraktionsbedingungen werden so gewählt, daß die Kohlendiöxidextraktion bei einem Druck von 250 bis 600 bar, vorzugsweise 300 bis 400 bar, durchgeführt wird.

Weiterhin wird die Extraktion bei einer Temperatur zwischen 10 °C und 45 °C, vorzugsweise zwischen 30 °C und 45 °C, durchgeführt. Bei dieser Temperatur besitzt das Kohlendioxid gute Löseeigenschaften für Azadirachtine. Außerdem ist die Substanz bei diesen Temperaturen stabil, so daß keine Aktivitätsverluste des Extraktes durch den Extkaktionsprozeß verursacht werden.

Die Entspannung des Extraktionsmittels erfolgt bei einer Temperatur von 10 ° bis 80 °C vorzugsweise 25 ° bis 40 °C auf einen Druck von 50 bis 80 bar, vorzugsweise 50 bis 70 bar. Auf diese Weise wird eine Zersetzung der extrahierten Stoffe vermieden.

Ein Extrakt mit besonders hohem Gehalt an Azadirachtinen wird erhalten, wenn als Extraktionsmittel ein Gemisch aus Kohlendioxid und mindestens einem weiteren Schleppmittel verwendet wird. Das Schleppmittel wird dabei im Kohlendioxid gelöst. Dadurch wird bei der Extraktion ein stationärer Zustand erreicht, d.h. die Extraktion erfolgt unter kontrollierten Bedingungen. Durch die erhöhte Polarität des Extraktionsmittels werden die Azadirachtine wirkungsvoll aus dem Extraktionsgut ausgespült, wodurch sich hohe Ausbeuten erreichen lassen. überraschenderweise.hat sich gezeigt, daß eine Abtrennung von störenden Nebenstoffen möglich ist, wenn zunächst das Extraktionsgut mit reinem Kohlendioxid in subkritischem oder superkritischem Zustand extrahiert wird. Je nach Reaktionsführung können zuerst die öligen Bestandteile und/oder störende Limonoide wie Nimbin und Salannin zum größten Teil entfernt werden. Anschließend ist eine Gewinnung Azadirachtin-reicher Extrakte mögliche indem dem Extraktionsmittel polare Schleppmittel zugesetzt werden.

Als Schleppmittel geeigneter Polarität haben sich Substanzen erwiesen, die aus der Gruppe, die von Alkoholen, Ketonen, Estern, Nitrilen oder zyklischen Ethern gebildet wird, ausgewählt werden.

Die Aufarbeitung des Extraktes vereinfacht sich, wenn diese Schleppmittel Moleküle mit einer Kohlenstoffanzahl zwischen 1 und 5 sind. Die Schleppmittel besitzen dann einen ausreichend niedrigen Siedepunkt, so daß sie leicht unter vermindertem Druck aus dem Extrakt abdestilliert werden können.

Der Anteil des Schleppmittels am Extraktionsmittel sollte 0,5% bis 30%, vorzugsweise 2% bis 10%, beitragen.

Es ist günstig, die Extraktion in mehreren Stufen durchgeführt wird, zur Gewinnung von unterschiedlichen Fraktionen der Inhaltsstoffe. Es können dann Fraktionen mit dem höchsten Azadirachtingehalt vereinigt werden, während solche mit hohem Gehalt an störenden Nebenstoffen verworfen werden. Eine Fraktionierung der Inhaltsstoffe in Bestandteilen des Neem-Baumes ist dabei einfach durch eine Variation der Extraktionsbedingungen möglich.

Ein besonders hoher Wirkstoffgehalt im Extrakt wird erhalten, wenn während einer Extraktionsstufe der Anteil des Schleppmittels im Extraktionsmittel annähernd konstant gehalten wird. Die Extraktion kann dann unter stationären Bedingungen durchgeführt werden, wodurch die Extraktion besser konntrolliert werden kann.

Eine Fraktionierung des Extrakts wird in einer Ausführungsform der Erfindung dadurch erreicht, daß bei der stufenweisen Extraktion der Druck des Kohlendioxids unterschiedlich gewählt wird, vorzugsweise gegenüber der vorhergehenden Stufe erhöht wird. Bei unterschiedlichen Drücken besitzt das Kohlendioxid unterschiedliche Löseeigenschaften für die verschiedenen Inhaltsstoffe der Bestandteile des Neem-Baums. Überraschenderweise hat sich gezeigt, daß durch fraktionierte Extraktion bei unterschiedlichen Drücken eine weitgehende Abtrennung störender Limonoide möglich ist. Es lassen sich dann hochangereicherte Azadirachtin-haltige Extrakte gewinnen.

Als günstige Extraktionsbedingungen hat sich erwiesen daß zunächst eine Extraktion mit Kohlendioxid im subkritischen oder superkritischen Zustand bei 250 bar bis 350 bar, vorzugsweise 280 bar bis 320 bar durchgeführt wird, gefolgt von einer Extraktion mit Kohlendioxid im subkritischen oder superkritischen Zustand bei 350 bar bis 600 bar, vorzugsweise 380 bar bis 420 bar.

Die Fraktionen werden dabei so geschnitten, daß die Extraktion für eine Dauer von 3 bis 9 Stunden, vorzugsweise 4 bis 6 Stunden erfolgt.

Noch reinere azadirachtinhaltige Extrakte lassen sich erhalten, wenn zur Abtrennung von Nebenprodukten eine Vorreinigung der Bestandteile des Neembaumes durchgeführt wird.

Die Vorreinigung kann in einer Ausführungsform der Erfindung so erfolgen, daß die Bestandteile des Neembaumes durch Pressen entölt werden. Dies kann beispielsweise in einer gewöhnlichen ölmühle geschehen. Zur Extraktion gelangt dann der Presskuchen.

In einer anderen Ausführungsform der Erfindung wird die Vorreinigung mit Kohlendioxid in subkritischem oder superkritischem Zustand durchgeführt. Dabei kann beispielsweise auch direkt der gemahlene und getrocknete Neemsamen eingesetzt werden.

Dabei hat es sich als günstig erwiesen, die Bestandteile des Neembaumes in gepulverter Form zu extrahieren.

Um ein Zusammenbacken des Extraktionsgutes zu verhindern kann den Bestandteilen des Neembaumes zur Extraktion ein Füllmittel, vorzugsweise Kieselgur zugegeben werden.

Nach dem erfindungsgemäßen Verfahren wird ein Extrakt erhalten, der einen geringen Anteil an störenden Nebenprodukten aufweist sowie lagerfähig und leicht zu verarbeiten ist.

Dabei ist besonders vorteilhaft, daß der Extrakt pulverförmig ist.

Seine hohe Wirksamkeit liegt darin begründet, daß der Extrakt einen Anteil von mindestens 20% Azadirachtinen enthält.

Durch entsprechende Reaktionsführung lassen sich auch Extrakte gewinnen, die einen Gehalt von 1 bis 25% Nimbin oder 2 bis 30% Salanhin enthalten.

Wegen seines hohen Gehalts an Azadirachtinen eignet sich der Extrakt besonders zur Schädlingsbekämpfung, insbesondere von Schadarthropoden.

Mit dem erfindungsgemäßen Verfahren wird auch ein Extraktionsrückstand mit wertvollen Eigenschaften erhalten. Durch die Extraktion werden ölige Bestandteile fast völlig entfernt. Damit wird ein trockenes Pulver erhalten, das leicht zu verarbeiten ist und noch einen ausreichenden Azadirachtingehalt aufweist, um beispielsweise im Pflanzenschutz eingesetzt zu werden. Durch die Extraktion sind auch Bitterstoffe weitgehend entfernt worden. Der Extraktionsrückstand kann deshalb auch als Futtermittelzusatz in der Tiermast eingesetzt werden. Es kann dann ein geringerer Schädlingsbefall des Magen-Darm-Traktes der Nutztiere erreicht werden.

Die Erfindung wird an Hand von Beispielen und zwei Figuren erläutert. Dabei zeigt:
- Fig. 1:: eine Apparatur zur Durchführung des erfindungsgemäßen Verfahrens;
- Fig. 2:: ein Diagramm, das den Anteil bestimmter Inhaltsstoffe im Extrakt in Abhängigkeit von der Nummer der Fraktion angibt.

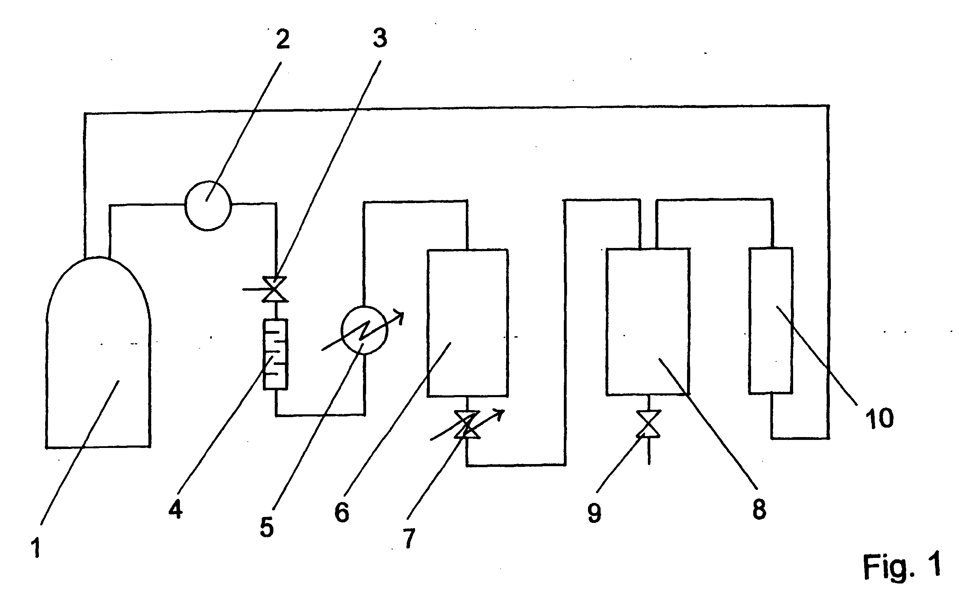

Fig. 1 erläutert beispielhaft eine Anlage, die zur Durchführung des erfindungsgemäßen Verfahrens verwendet werden kann.

Aus einem Vorratsbehälter 1 wird CO₂ entnommen und mittels eines Kompressors 2 auf den erforderlichen Druck gebracht. Ober eine Injektionsstelle 3 wird Schleppmittel zugegeben, das über eine Mischstrecke 4 mit dem Kohlendioxid vermischt wird. In einem Wärmetauscher 5 wird das Extraktionsmittel auf die gewünschte Temperatur gebracht und anschließend einer Extraktionskammer 6 zugeleitet, wobei der superkritische oder subkritische Zustand erhalten bleibt. Die Extraktionskammer ist mit Extraktionsgut, beispielsweise gemahlenem, entöltem Neemsamen gefüllt. Nach der Extraktion wird der kohlendioxidhaltige Extrakt zur Verringerung des Drucks durch ein beheizbares Druckreduzierventil 7 geleitet und sodann in eine Trennkammer 8 gebracht, wo Extrakt und ein großer Teil des Schleppmittels vom Kohlendioxid abgetrennt werden. Der Extrakt kann an der Entnahmestelle 9 aus der Trennkammer 8 entnommen werden. Anschließend wird das Kohlendioxid in einem Kühler 10 gekühlt. Das verflüssigte Gas wird wieder dem Vorratsbehälter 1 zugeführt.

Im folgenden wird in mehreren Ausführungsbeispielen das erfindungsgemäße Verfahren genauer erläutert. Das Verfahren ist jedoch nicht nur auf die angegebenen Beispiele beschränkt.

### Beispiel 1:

### Entölung von gemahlenem Neemsamen

10 kg fein gemahlener und gesiebter Neemsamen werden bei einem Druck von 300 bar und einer Temperatur von 40 °C unter superkritischen Bedingungen mit Kohlendioxid 6 h extrahiert. Der Extraktor ist mit einem Separator verbunden, der auf einen Druck von 60 bar und eine Temperatur von 30 °C konditioniert ist. Dies führt zur Abtrennung von 3,98 kg Öl. Nach erneuter Kompression wird das Kohlendioxid wieder dem Extraktor zugeführt.

Nach der Extraktion werden dem Extraktor 6,0 kg entöltes Pulver entnommen.

Zur Analyse auf den Azadirachtingehalt werden jeweils 1 g Öl bzw. 1 g entöltes Pulver mit 10 ml Methanol extrahiert. Das Lösungsmittel wird abgezogen und der Wirkstoffgehalt mit Hilfe von HPLC unter Standardbedingungen (RP-18 Säule, isokratisches Eluent: 45/55 Acetonitril/Wasser) bestimmt.

| Öl: | |
|---|---|
| Azadirachtin A | 0,08 % |
| Nimbin | 0,27 % |
| Salannin | 0, 91 % |

| entöltes Pulver: | |
|---|---|
| Azadirachtin A | 0,5 % |

Das entölte Pulver kann nach Vermahlen direkt zur Schädlingsbekämpfung im Pflanzenschutz eingesetzt werden. Es kann dazu auch mit einem geeigneten Träger vermischt sein oder in einer Flüssigkeit suspendiert werden.

### Beispiel 2:

### Extraktion des entölten Pulvers

10 kg des in Beispiel 1 erhaltenen entölten Pulvers werden unter superkritischen Bedingungen bei einem Druck von 400 bar und einer Temperatur von 40 °C 4 h in einem Extraktor extrahiert. Als Extraktionsmittel dient Kohlendioxid mit einem Zusatz von 10 % trockenem Isopropanol als Schleppmittel. Das Extraktionsmittel wird nach der Entspannung und erneuter Kompression wieder dem Extraktor zugeführt.

Nach Entspannung des Extraktionsmittels im Separator und Abdestillieren des Schleppmittels im Vakuum werden 450 g eines leicht gelblichen Pulvers erhalten.

Eine Analyse des Pulvers mittels HPLC (RP-18 Säule, isokratische Elution: 45/55 Acetonitril/Wasser) ergibt einen Gehalt von 10 % Azadirachtin A.

### Beispiel 3:

Das erfindungsgemäße Verfahren eignet sich auch zur Extraktion eines auf konventionellem Weg erhaltenen Neem-Extrakts.

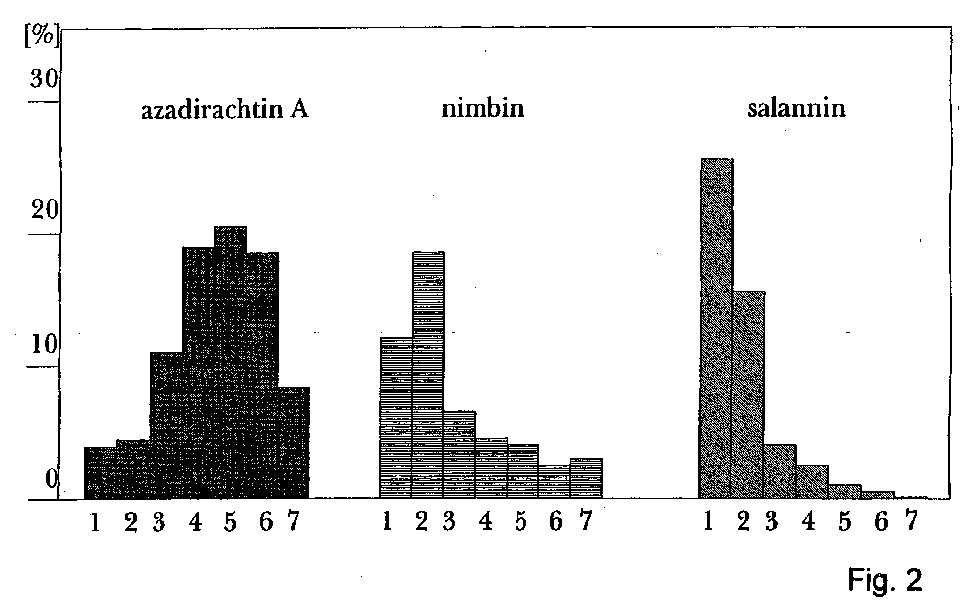

635 g eines kommerziell erhältlichen Neem-Extraktpulvers (Neemex India Ltd) werden bei 400 bar und 40 °C drei Mal für je zwei Stunden mit Kohlendioxid unter superkritischen Bedingungen extrahiert. Anschließend wird mit steigendem Zusatz von Isopropanol (2 %, 4,6 %, 7,3 %) jeweils 2 h bei 300 bar und 40 ° C extrahiert. Zum Abschluß wird das Extraktionsgut mit reinem Isopropanol gespült. Die einzelnen Fraktionen werden jeweils in getrennten Vorlagen gesammelt. In den Fraktionen enthaltenes Isopropanol wird unter vermindertem Druck abdestilliert und der Gehalt an Azadirachtin, Nimbin und Salannin in den Extrakten durch HPLC (RP-18 Säule, isokratische Elution, 45/55 Acetonitril/Wasser) bestimmt. Die Ergebnisse sind in Tabelle 1 und Fig. 2 dargestellt. In Tab. 1 ist in der ersten Spalte die Ausbeute pro Fraktion als Prozentanteil bezogen auf die Einwaage des vorgereinigten Neem-Pulvers-angegeben. Die einzelnen Fraktionen wurden mit Hilfe von HPLC unter Standardbedingungen (RP-18 Säule, isokratisches Eluent: 45/55 Acetonitril/Wasser) analysiert. Der prozentuale Anteil von Azadirachtin, Nimbin und Salannin bezogen auf die im jeweiligen Extraktionsschritt erhaltene Extraktmenge ist in den Spalten zwei bis vier angegeben. In Spalte fünf ist die Summe der Anteile von Azadirachtin, Nimbin und Salannin im jeweiligen Extrakt aufgeführt. In der ersten Zeile ist der extrahierbare prozentuale Anteil von Azadirachtin, Nimbin und Salannin bezogen auf die Einwaage angegeben.

Überraschenderweise konnten die Limonoide Nimbin und Salannin zum überwiegenden Teil durch Extraktion des vorgereinigten Neem-Pulvers mit reinem Kohlendioxid bei 300 bar und 40 °C abgetrennt werden. Durch Zugabe steigender Mengen an Isopropanol (IPA) konnten dann Fraktionen mit einem hohen Gehalt an Azadirachtin erhalten werden. Im Extraktionsgut verbleiben nur noch geringe Mengen an Azadirachtinen und Bitterstoffen.

**Tabelle 1**

| Superkritische Extraktion von Neem-Extraktpulver mit Kohlendioxid | | | | | |
|---|---|---|---|---|---|
| | Ausbeute | Azadirachtin | Nimbin | Salannin | Summe A+S+N |
| | (%) | (%) | (%) | (%) | (%) |
| Einsatz (683 g) | 100 | 10,7 | 5,0 | 5,0 | 20,7 |
| 1. Extraktion CO₂ | 10 | 3,2 | 12,5 | 25,7 | 41,4 |
| 2. Extraktion CO₂ | 12,6 | 3,9 | 18,0 | 16,9 | 38,8 |
| 3. Extraktion CO₂ | 16,7 | 10,4 | 6,5 | 4,0 | 20,9 |
| 4. Extraktion CO₂+2%IPA | 7,7 | 18,4 | 4,5 | 1,7 | 24,6 |
| 5. Extraktion CO₂+4,6%IPA | 11,7 | 21,9 | 4,2 | 0,5 | 26,6 |
| 6. Extraktion CO₂+7,3%IPA | 12,6 | 18,2 | 2,3 | 0,1 | 20,6 |
| Mazeration 100% IPA | 27,8 | 8,2 | 2,9 | 0,06 | 11,1 |

Mit dem erfindungsgemäßen Verfahren ist es auch möglich, Azadirachtin-reiche Extrakte aus dem Preßkuchen gepreßter Neem-Nüsse zu gewinnen. Ebenso ist es möglich, den nach Beispiel 2 gewonnenen Extrakt weiter durch fraktionierte Extraktion mit Kohlendioxid unter Zusatz steigender Mengen an polaren Lösungsmitteln aufzutrennen und so Extrakte mit einem hohen Gehalt an Azadirachtin zu erhalten.

Eine Fraktionierung von Extrakten aus Bestandteilen des Neembaumes ist nach dem erfindungsgemäßen Verfahren nicht nur durch Zugabe von steigenden Mengen an polarem Lösungsmittel zum Extraktionsmittel Kohlendioxid möglich. Eine Abtrennung von Azadirachtin-reichen Fraktionen ist auch durch Extraktion mit Kohlendioxid unter steigendem Druck möglich. Dazu werden zunächst bei einem Druck von 300 bar bei ungefähr 40 °C störende Nebenstoffe entfernt und dann bei einem Kohlendioxiddruck von ungefähr 450 bar Azadirachtin-reiche Fraktionen abgeschieden.

### Bezugszeichenliste

- 1: Vorratsbehälter
- 2: Kompressor
- 3: Injektionsstelle
- 4: Mischstrecke
- 5: Wärmetauscher
- 6: Extraktionskammer
- 7: Druckreduzierungsventil
- 8: Trennkammer
- 9: Entnahmestelle
- 10: Kühler

## Patentansprüche

1. Verfahren zur Extraktion von Inhaltsstoffen aus Bestandteilen des Neem-Baumes, vorzugsweise aus Samen und Nüssen, unter Verwendung von Kohlendioxid in subkritischem oder superkritischen Zustand als Extraktionsmittel, zur Darstellung von Extrakten mit hohem Wirkstoffgehalt, **dadurch gekennzeichnet, dass** das Extraktionsmittel im Kreislauf geführt wird, wobei die Extraktion bei einem Druck von 250 bis 600 bar und einer Temperatur zwischen 10 und 45 °C durchgeführt wird und das Extraktionsmittel im Kreislauf bei einer Temperatur von 10 bis 80 °C auf einen Druck von 50 bis 80 bar entspannt wird.

2. Verfahren nach Anspruch 1, **dadurch gekennzeichnet, dass** die Extraktion bei einer Temperatur zwischen 30 °C und 45 °C durchgeführt wird.

3. Verfahren nach Anspruch 1 oder 2 **dadurch gekennzeichnet, dass** als Extraktionsmittel ein Gemisch aus Kohlendioxid und mindestens einem weiteren Schleppmittel verwendet wird.

4. Verfahren nach Anspruch 3 **dadurch gekennzeichnet, dass** das Schleppmittel aus der Gruppe, die von Alkoholen, Ketonen, Estern, Nitrilen, Halogenkohlenwasserstoffen, oder zyklischen Ethern gebildet wird, ausgewählt ist.

5. Verfahren nach Anspruch 4 **dadurch gekennzeichnet, dass** das Schleppmittel Moleküle mit einer Kohlenstoffanzahl zwischen 1 und 5 aufweist.

6. Verfahren nach einem der Ansprüche 3 bis 5 **dadurch gekennzeichnet, dass** der Anteil des Schleppmittels am Extraktionsmittel 0,5 bis 30%, vorzugsweise 2 bis 10% beträgt.

7. Verfahren nach einem der vorhergehenden Ansprüche **dadurch gekennzeichnet, dass** das Extraktionsmittel bei einer Temperatur von 25 bis 40 °C auf einen Druck von 50 bis 70 bar entspannt wird.

8. Verfahren nach einem der vorhergehenden Ansprüche **dadurch gekennzeichnet, dass** die Extraktion in mehreren Stufen durchgeführt wird, zur Gewinnung unterschiedlicher Fraktionen der Inhaltsstoffe.

9. Verfahren nach Anspruch 8 **dadurch gekennzeichnet, dass** während einer Extraktionsstufe der Anteil des Schleppmittels im Extraktionsmittel annähernd konstant gehalten wird.

10. Verfahren nach einem der Ansprüche 8 oder 9 **dadurch gekennzeichnet, dass** bei der stufenweisen Extraktion der Druck des Extraktionsmittels in verschiedenen Extraktionsstufen unterschiedlich gewählt wird, vorzugsweise gegenüber der vorhergehenden Stufe erhöht wird.

11. Verfahren nach einem der Ansprüche 8 bis 10 **dadurch gekennzeichnet, dass** zunächst eine Extraktion mit Kohlendioxid im subkritischen oder superkritischen Zustand bei 250 bar bis 350 bar, vorzugsweise 280 bar bis 320 bar durchgeführt wird, gefolgt von einer Extraktion mit Kohlendioxid im subkritischen oder superkritischen Zustand bei 350 bar bis 600 bar, vorzugsweise 380 bar bis 420 bar.

12. Verfahren nach einem der vorhergehenden Ansprüche **dadurch gekennzeichnet, dass** die Extraktion für eine Dauer von 3 bis 9 Stunden, vorzugsweise 4 bis 6 Stunden erfolgt.

13. Verfahren nach einem der vorhergehenden Ansprüche **dadurch gekennzeichnet, dass** zur Abtrennung von Nebenprodukten eine Vorreinigung der Bestandteile des Neembaumes durchgeführt wird.

14. Verfahren nach Anspruch 13 **dadurch gekennzeichnet, dass** die Vorreinigung mit Kohlendioxid in subkritischem oder superkritischem Zustand durchgeführt wird.

15. Verfahren nach einem der vorhergehenden Ansprüche **dadurch gekennzeichnet, dass** die Bestandteile des Neembaumes in gepulverter Form extrahiert werden.

16. Verfahren nach einem der vorhergehenden Ansprüche **dadurch gekennzeichnet, dass** den Bestandteilen des Neembaumes zur Extraktion ein Füllmittel, vorzugsweise Kieselgur, zugegeben wird.

## Claims

1. A method for extracting ingredients from constituents of the neem tree, preferably from seeds and nuts, using carbon dioxide in a subcritical or supercritical state as an extraction agent, for the preparation of extracts with a high active ingredient content, **characterised in that** the extraction agent is circulated, wherein the extraction is carried out at a pressure of from 250 to 600 bar and at a temperature of between 10 and 45°C, and the extraction agent in circulation is expanded at a temperature of from 10 to 80°C to a pressure of from 50 to 80 bar.

2. A method according to Claim 1, **characterised in that** the extraction is carried out at a temperature of between 30 and 45°C.

3. A method according to Claim 1 or 2, **characterised in that** a mixture of carbon dioxide and at least one further entraining agent is used as extraction agent.

4. A method according to Claim 3, **characterised in that** the entraining agent is chosen from the group formed by alcohols, ketones, esters, nitriles, halogenated hydrocarbons or cyclic ethers.

5. A method according to Claim 4, **characterised in that** the entraining agent comprises molecules with a carbon number of between 1 and 5.

6. A method according to any one of Claims 3 to 5, **characterised in that** the proportion of the entraining agent in the extraction agent is 0.5 to 30 %, preferably 2 to 10 %.

7. A method according to any one of the preceding Claims, **characterised in that** the extraction agent is expanded at a temperature of 25 to 40°C to a pressure of from 50 to 70 bar.

8. A method according to any one of the preceding Claims, **characterised in that** the extraction is carried out in multiple stages in order to obtain different fractions of the ingredients.

9. A method according to Claim 8, **characterised in that** during an extraction stage the proportion of entraining agent in the extraction agent is kept approximately constant.

10. A method according to either Claim 8 or Claim 9, **characterised in that** during the extraction in stages the pressure of the extraction agent is chosen so that it varies in different extraction stages, preferably is increased with respect to the preceding stage.

11. A method according to any one of Claims 8 to 10, **characterised in that** initially an extraction with carbon dioxide is carried out in the subcritical or supercritical state at 250 to 350 bar, preferably 280 to 320 bar, followed by an extraction with carbon dioxide in the subcritical or supercritical state at 350 to 600 bar, preferably 380 to 420 bar.

12. A method according to any one of the preceding Claims, **characterised in that** the extraction takes place for a period of 3 to 9 hours, preferably 4 to 6 hours.

13. A method according to any one of the preceding Claims, **characterised in that** pretreatment of the constituents of the neem tree is carried out so as to separate by-products.

14. A method according to Claim 13, **characterised in that** the pretreatment is carried out with carbon dioxide in a subcritical or supercritical state.

15. A method according to the any one of the preceding Claims, **characterised in that** the constituents of the neem tree are extracted in powder form.

16. A method according to the any one of the preceding Claims, **characterised in that** a filler, preferably diatomaceous earth, is added to the constituents of the neem tree for the extraction.

## Revendications

1. Procédé d'extraction des substances contenues dans des constituants de l'arbre neem, de préférence dans les graines et les amandes, moyennant l'utilisation de dioxyde de carbone à l'état sous- ou supercritique comme agent d'extraction, pour la préparation d'extraits avec une haute teneur en principes actifs, **caractérisé en ce que** l'agent d'extraction est utilisé en circuit fermé, l'extraction étant effectuée à une pression de 250 à 600 bars et à une température comprise entre 10 et 45 °C, et l'agent d'extraction étant détendu dans le circuit fermé, à une température de 10 à 80 °C, jusqu'à une pression de 50 à 80 bars.

2. Procédé selon la revendication 1, **caractérisé en ce que** l'extraction est effectuée à une température comprise entre 30 °C et 45 °C.

3. Procédé selon la revendication 1 ou 2, **caractérisé en ce qu'**un mélange de dioxyde de carbone et d'au moins un autre agent d'entraînement est utilisé.

4. Procédé selon la revendication 3, **caractérisé en ce que** l'agent d'entraînement est choisi dans le groupe formé par des alcools, des cétones, des esters, des nitriles, des hydrocarbures halogénés ou des éthers cycliques.

5. Procédé selon la revendication 4, **caractérisé en ce que** l'agent d'entraînement comporte des molécules avec un nombre d'atomes de carbone compris entre 1 et 5.

6. Procédé selon l'une quelconque des revendications 3 à 5, **caractérisé en ce que** la proportion d'agent d'entraînement dans l'agent d'extraction est de 0,5 à 30 %, de préférence de 2 à 10 %.

7. Procédé selon l'une quelconque des revendications précédentes, **caractérisé en ce que** l'agent d'extraction est détendu à une température de 25 à 40 °C jusqu'à une pression de 50 à 70 bars.

8. Procédé selon l'une quelconque des revendications précédentes, **caractérisé en ce que** l'extraction est effectuée en plusieurs étapes, pour obtenir différentes fractions des substances contenues.

9. Procédé selon la revendication 8, **caractérisé en ce que,** pendant une étape d'extraction, la proportion d'agent d'entraînement dans l'agent d'extraction est maintenue à peu près constante.

10. Procédé selon l'une quelconque des revendications 8 ou 9, **caractérisé en ce que,** lors de l'extraction par étapes, la pression de l'agent d'extraction dans les différentes étapes de l'extraction est choisie différente, de préférence qu'elle est augmentée par rapport à l'étape précédente.

11. Procédé selon l'une quelconque des revendications 8 à 10, **caractérisé en ce que** d'abord une extraction est effectuée avec du dioxyde de carbone à l'état sous-critique ou supercritique entre 250 bars et 350 bars, de préférence entre 280 bars et 320 bars, et qu'elle est suivie par une extraction avec du dioxyde de carbone à l'état sous-critique ou supercritique entre 350 bars et 600 bars, de préférence entre 380 bars et 420 bars.

12. Procédé selon l'une quelconque des revendications précédentes, **caractérisé en ce que** l'extraction s'effectue pendant une durée de 3 à 9 heures, de préférence de 4 à 6 heures.

13. Procédé selon l'une quelconque des revendications précédentes, **caractérisé en ce que,** pour la séparation des produits secondaires, une épuration préliminaire des constituants de l'arbre neem est effectuée.

14. Procédé selon la revendication 13, **caractérisé en ce que** l'épuration préliminaire est effectuée avec du dioxyde de carbone à l'état sous-critique ou supercritique.

15. Procédé selon l'une quelconque des revendications précédentes, **caractérisé en ce que** les constituants de l'arbre neem sont soumis à l'extraction sous forme pulvérulente.

16. Procédé selon l'une quelconque des revendications précédentes, **caractérisé en ce que,** pour l'extraction, les constituants de l'arbre neem sont additionnés d'une charge, de préférence de la terre de diatomées.
